# EUROPÄISCHE PATENTANMELDUNG

(11) **EP 1 816 050 A1**
(43) Veröffentlichungstag der Anmeldung: **08.08.2007**
(21) Anmeldenummer: 07101798.2
(22) Anmeldetag: 06.02.2007
(51) Int. Cl.: B61D 35/00, B60R 15/02, E05C 7/06

(54) **Vorrichtung zur getrennten Aufbewahrung zweier Gegenstände und zur Verhinderung der gleichzeitigen Entnahme beider Gegenstände**

(30) Priorität: 07.02.2006 DE 202006002002 U
(71) Anmelder: Wagemann GmbH, 22607 Hamburg (DE)
(72) Erfinder: Wagemann, Carl, 22607 Hamburg (DE)
(74) Vertreter: Eisenführ, Speiser & Partner

(57) **Zusammenfassung**

Die Erfindung betrifft eine Vorrichtung zur getrennten Aufbewahrung zweier Gegenstände (40,50) und zur Verhinderung der gleichzeitigen Entnahme beider Gegenstände, mit zwei voneinander getrennten Aufbewahrungskammern (4,5) zur Aufbewahrung jeweils eines der Gegenstände und mit einem Bewegungsmittel (1) zum Verbringen der Aufbewahrungskammern in eine Entnahmeposition oder eine Verschlussposition, wobei jede Aufbewahrungskammer
- die Entnahmeposition oder die Verschlussposition einnehmen kann, wobei die Aufbewahrungskammern so ausgestaltet sind, dass nur jeweils eine Aufbewahrungskammer die Entnahmeposition einnehmen kann,
- einen Verschlussdeckel (42,52) aufweist zum Verschließen einer Entnahmeöffnung der zugehörigen Aufbewahrungskammer zum Entnehmen und Einbringen des darin aufzubewahrenden Gegenstandes, wobei die Verschlussdeckel so ausgestaltet sind, dass sie nur geöffnet und geschlossen werden können, wenn sich die zugehörige Aufbewahrungskammer in der Entnahmeposition befindet, und
- eine Verriegelung (44,54) aufweist zur Blockierung einer Veränderung der Position der zugehörigen Aufbewahrungskammer, wenn sich der Gegenstand nicht in der zugehörigen Aufbewahrungskammer befindet, und zur Freigabe einer Veränderung der Position der zugehörigen Aufbewahrungskammer, wenn sich der Gegenstand in der zugehörigen Aufbewahrungskammer befindet.

## Beschreibung

Die vorliegende Erfindung betrifft eine Vorrichtung zur getrennten Aufbewahrung zweier Gegenstände und zur Verhinderung der gleichzeitigen Entnahme beider Gegenstände. Insbesondere betrifft die vorliegende Erfindung eine Vorrichtung mit einer Abwasserkupplung und einer Trinkwasserkupplung zum getrennten Anschluss einer WC-Entsorgungsanlage an eine mobile Toilette, insbesondere an ein geschlossenes Toilettensystem eines Zugs.

Bei den Bahngesellschaften werden geschlossene Toilettensysteme eingesetzt. Dabei fällt das Abwasser nicht auf das Gleis, sondern wird in Abwassertanks gesammelt. Zum Spülen wird Wasser in Trinkwasserqualität verwendet. Dieses Trinkwasser wird in einem Trinkwassertank im Waggon gespeichert. Für das Versorgen mit Trinkwasser und das Entsorgen des Abwassers des geschlossenen Toilettensystems eines Zugs werden spezielle WC-Entsorgungsanlagen mit getrennten Kupplungen und Schläuchen eingesetzt.

Die europäische Trinkwasserverordnung EN 1717 gibt u.a. vor, wie Trinkwasser zum Infektionsschutz behandelt werden soll. Bezogen auf den Schutz des Trinkwassers zur Verunreinigung gibt das Eisenbahnbundesamt (EBA) in einer Verfahrensrichtlinie vor, dass die oben beschriebenen WC-Entsorgungsanlagen nur dann zum Einsatz kommen dürfen, wenn gewährleistet ist, dass sich Trinkwasserschlauchkupplungen und Abwasserschlauchkupplungen nicht berühren können.

Diese Vorgabe wird bei einem bekannten Gerät, wie es beispielsweise in der DE 20010420 U1 beschrieben ist, dadurch erfüllt, dass die Anlagen in Schrankeinheiten untergebracht werden. Diese Schränke haben zwei Kammern, wobei sich in der einen Kammer ein Trinkwasserschlauch mit entsprechender Kupplung und in der anderen Kammer ein Abwasserschlauch mit entsprechender Kupplung befindet. Die Kammern sind bevorzugt elektromechanisch wechselseitig verriegelt, so dass immer nur eine Kammer geöffnet werden kann. Das bekannte Gerät ist jedoch relativ teuer, da Elektrobauteile teuer sind in Anschaffung und Wartung, und es auch nicht autark (unabhängig) arbeiten kann, also ohne Stromzufuhr auskommen kann.

Das Problem, zwei (oder mehrere) Gegenstände auf möglichst einfache und kostengünstige Weise getrennt voneinander aufzubewahren und dabei sicherzustellen, dass jeweils nur einer der beiden Gegenstände entnommen und benutzt werden kann, ist grundsätzlicher Art und stellt sich auch bei anderen technischen Anwendungen. Beispielsweise soll bei einem Apothekerschrank ggf. sichergestellt werden, dass, wenn eine Tür oder Lade geöffnet wird, um ein Medikament zu entnehmen, die anderen Türen oder Laden verriegelt sind.

Der Erfindung liegt die Aufgabe zugrunde, eine möglichst einfache und kostengünstige Vorrichtung zur getrennten Aufbewahrung zweier Gegenstände und zur Verhinderung der gleichzeitigen Entnahme beider Gegenstände zu schaffen, insbesondere zur getrennten Aufbewahrung einer Abwasserkupplung und einer Trinkwasserkupplung zum getrennten Anschluss einer WC-Entsorgungsanlage an eine mobile Toilette, insbesondere an ein geschlossenes Toilettensystem eines Zugs.

Die Aufgabe wird erfindungsgemäß gelöst durch eine Vorrichtung nach Anspruch 1, die zwei voneinander getrennte Aufbewahrungskammern aufweist zur Aufbewahrung jeweils eines der Gegenstände und ein Bewegungsmittel aufweist zum Verbringen der Aufbewahrungskammern in eine Entnahmeposition oder eine Verschlussposition, wobei jede Aufbewahrungskammer
- die Entnahmeposition oder die Verschlussposition einnehmen kann, wobei die Aufbewahrungskammern so ausgestaltet sind, dass nur jeweils eine Aufbewahrungskammer die Entnahmeposition einnehmen kann,
- einen Verschlussdeckel aufweist zum Verschließen einer Entnahmeöffnung der zugehörigen Aufbewahrungskammer zum Entnehmen und Einbringen des darin aufzubewahrenden Gegenstandes, wobei die Verschlussdeckel so ausgestaltet sind, dass sie nur geöffnet und geschlossen werden können, wenn sich die zugehörige Aufbewahrungskammer in der Entnahmeposition befindet, und
- eine Verriegelung aufweist zur Blockierung einer Veränderung der Position der zugehörigen Aufbewahrungskammer, wenn sich der Gegenstand nicht in der zugehörigen Aufbewahrungskammer befindet, und zur Freigabe einer Veränderung der Position der zugehörigen Aufbewahrungskammer, wenn sich der Gegenstand in der zugehörigen Aufbewahrungskammer befindet.
   Die Erfindung betrifft auch eine Vorrichtung mit einer Abwasserkupplung und einer Trinkwasserkupplung zum getrennten Anschluss einer WC-Entsorgungsanlage an eine mobile Toilette, insbesondere an ein geschlossenes Toilettensystem eines Zugs, die in jeweils einer von zwei voneinander getrennten Aufbewahrungskammern aufbewahrt sind, und mit einem Bewegungsmittel zum Verbringen der Aufbewahrungskammern in eine Entnahmeposition oder eine Verschlussposition, wobei jede Aufbewahrungskammer
- die Entnahmeposition oder die Verschlussposition einnehmen kann, wobei die Aufbewahrungskammern so ausgestaltet sind, dass nur jeweils eine Aufbewahrungskammer die Entnahmeposition einnehmen kann,
- einen Verschlussdeckel aufweist zum Verschließen einer Entnahmeöffnung der zugehörigen Aufbewahrungskammer zum Entnehmen und Einbringen der darin aufzubewahrenden Kupplung, wobei die Verschlussdeckel so ausgestaltet sind, dass sie nur geöffnet und geschlossen werden können, wenn sich die zugehörige Aufbewahrungskammer in der Entnahmeposition befindet, und
- eine Verriegelung aufweist zur Blockierung einer Veränderung der Position der zugehörigen Aufbewahrungskammer, wenn sich keine Kupplung in der zugehörigen Aufbewahrungskammer befindet, und zur Freigabe einer Veränderung der Position der zugehörigen Aufbewahrungskammer, wenn sich eine in der zugehörigen Aufbewahrungskammer befindet.

Der Erfindung liegt der Gedanke zugrunde, die Aufbewahrungsvorrichtung so auszugestalten und entsprechende mechanische Mittel vorzusehen, dass einerseits gewährleistet ist, dass sich jeweils immer nur eine der Aufbewahrungskammern in der Entnahmeposition befindet, in der der darin aufzubewahrende Gegenstand entnommen oder eingebracht werden kann. Ferner sind Mittel vorgesehen, die verhindern, dass eine Aufbewahrungskammer aus der Entnahmeposition in die Verschlussposition gebracht werden kann (um somit beispielsweise die andere Aufbewahrungskammer in die Entnahmeposition zu bringen), solange sich der Gegenstand nicht in der Aufbewahrungskammer befindet, wenn sich also beispielsweise die Trinkwasserkupplung nicht in der dafür vorgesehenen Aufbewahrungskammer befindet. Dazu ist erfindungsgemäß eine entsprechende Verriegelung vorgesehen, die eine Veränderung der Position der Aufbewahrungskammern in diesem Fall blockiert. Des weiteren sind erfindungsgemäß Mittel vorgesehen, die verhindern, dass aus einer Aufbewahrungskammer der darin befindliche Gegenstand entnommen werden kann bzw. der Gegenstand eingebracht werden kann, wenn sich die Aufbewahrungskammer nicht in der Entnahmeposition befindet. Dies wird erfindungsgemäß mittels geeignet ausgestalteter Verschlussdeckel gewährleistet.

Die erfindungsgemäße Vorrichtung benötigt somit keinerlei Energiezufuhr, ist also unabhängig, sondern gewährleistet allein durch den mechanischen Aufbau und die eingesetzten mechanischen Mittel die gewünschten Funktionen. Eine solche Vorrichtung lässt sich demnach auch kostengünstiger herstellen und warten, da keine teuren Elektrobauteile im Schadensfall zu beschaffen und einzubauen sind.

Vorteilhafte Ausgestaltungen der Erfindung sind in den Unteransprüchen angegeben. Bevorzugt ist die Vorrichtung als Doppelrohr ausgestaltet, die ein mittels einer Trennwand in die Aufbewahrungskammern unterteiltes Innenrohr und ein um das Innenrohr herum angeordnetes, relativ zu dem Innenrohr verdrehbares Außenrohr aufweist. Ein Verbringen einer Aufbewahrungskammer von beispielsweise der Entnahmeposition in die Verschlussposition wird dabei durch Verdrehen der beiden Rohre zueinander erreicht, beispielsweise durch manuelles Verdrehen des Außenrohrs gegenüber dem festsitzenden Innenrohr. Die Winkelpositionen der Entnahmepositionen der beiden Aufbewahrungskammern sind dabei bevorzugt verschieden gewählt, wodurch sie sich ansonsten gleich ausgestaltete Bauteile für die beiden Aufbewahrungskammern verwenden lassen.

In einer weiteren Ausgestaltung ist bevorzugt vorgesehen, dass das Außenrohr an den beiden Enden jeweils eine Aussparung aufweist zur Aufnahme eines korrespondierenden Eingriffs, insbesondere eines Scharniers, des zugehörigen Verschlussdeckels in der Entnahmeposition der zugehörigen Aufbewahrungskammer, so dass sich der Verschlussdeckel öffnen und schließen lässt.

Diese Ausgestaltung stellt eine technisch einfache, wirkungsvolle Lösung dar. So ist beispielsweise das Scharnier des Verschlussdeckels durch den Rand des Außenrohrs blockiert, wenn sich die zugehörige Aufbewahrungskammer nicht in der Entnahmeposition befindet. Um auf einfache Weise zu gewährleisten, dass nicht beide Aufbewahrungskammern die Entnahmeposition einnehmen können, sind die Aussparungen an den beiden Enden des Außenrohrs an unterschiedlichen Winkelpositionen entlang des Umfangs angebracht.

In einer weiteren Ausgestaltung ist vorgesehen, dass die Verriegelung jeweils mindestens einen Riegel aufweist, der bei aus der Aufbewahrungskammer entnommenem Gegenstand in eine zugehörige Verriegelungsöffnung in dem Außenrohr eingreift und dadurch ein Verdrehen des Außenrohrs gegenüber dem Innenrohr verhindert, und der bei in der Aufbewahrungskammer befindlichem Gegenstand nicht in die Verriegelungsöffnung in dem Außenrohr eingreift und dadurch ein Verdrehen des Außenrohrs gegenüber dem Innenrohr erlaubt. Der Riegel kann beispielsweise mittels einer Feder gehalten werden, die den Riegel so ausrichtet, dass er in die zugehörige Verriegelungsöffnung im Außenrohr eingreift, wenn sich der aufzubewahrende Gegenstand nicht in der Aufbewahrungskammer befindet.

Alternativ zu den Riegeln kann zur Verriegelung vorgesehen sein, dass an der Innenwand der Aufbewahrungskammern jeweils ein Federblech angeordnet ist, das, z.B. mittels einer Druckfeder, in den Innenraum gedrückt wird. An dem Federblech ist ein Stift angebracht, der bei nicht in der Aufbewahrungskammer befindlichem Gegenstand in eine Verriegelungsöffnung eingreift und so verhindert, dass die Aufbewahrungsvorrichtung in einen Zustand gebracht wird, in der die andere Aufbewahrungskammer geöffnet werden kann. Wenn der Gegen-stand in die entsprechende Aufbewahrungskammer eingebracht wird, drückt dieser dann das Federblech in Richtung der Innenwand der Aufbewahrungskammer, so dass der an dem Federblech angebrachte Stift nicht mehr in die zugehörige Verriegelungsöffnung eingreift und eine Veränderung des Zustands der Aufbewahrungsvorrichtung damit freigegeben ist.

Zur relativen Bewegung des Außenrohrs gegenüber dem Innenrohr kann beispielsweise ein mechanisch zu betätigender Griff als Bewegungsmittel vorgesehen sein, der beispielsweise außen an dem Außenrohr angebracht ist. Grundsätzlich ist jedoch denkbar, dass auch andere Mittel verwendet werden, beispielsweise elektrisch oder hydraulisch betriebene Antriebsmittel, was insbesondere bei größeren Anlagen eingesetzt werden kann.

Zur Härtung und zum Erreichen eines guten Korrosionsschutzes sind die Oberflächen der Vorrichtung bevorzugt mittels eines QPQ-Verfahrens (Quench-Polish-Quench; Salznitridbadcarburieren in Kombination mit einer zweimaligen oxidierenden Abkühlung und einer Zwischenbehandlung (Polieren)). behandelt. Dies ist insbesondere bei Anwendungen von Bedeutung, bei denen die Vorrichtung ständig oder häufig mit Wasser in Berührung kommt. Außerdem bieten gehärtete Bauteile einen besseren Schutz gegen gewaltsames Aufbrechen oder gewaltsame Manipulationen.

In einer weiteren Ausgestaltung ist vorgesehen, dass die Vorrichtung eine mittels einer Trennwand in die Aufbewahrungskammern unterteilte Aufbewahrungsbox aufweist, an der außen eine in Längsrichtung der Aufbewahrungsbox verschiebbare Verschiebevorrichtung angebracht ist mit Führungsnuten, in denen entsprechende, an den Verschlussdeckeln angebrachte Führungsstifte laufen, wobei die Führungsnuten und Führungsstifte so angeordnet und ausgestaltet sind, dass immer nur maximal ein Führungsstift freigegeben ist zum Öffnen des zugehörigen Verschlussdeckels.

Die Erfindung wird nachfolgend anhand der Zeichnungen näher erläutert, die beispielhafte Ausgestaltungen der erfindungsgemäßen Vorrichtung zeigen. Insbesondere zeigen:
- Fig. 1: eine Schnittdarstellung im Längsschnitt durch eine erfindungsgemäße Aufbewahrungsvorrichtung mit darin befindlicher Abwasserkupplung und Trinkwasserkupplung,
- Fig. 2: Querschnittsdarstellungen quer zur Längsrichtung einer erfindungsgemäßen Vorrichtung,
- Fig. 3: verschiedene Seitenansichten der Längsseite des Außenrohrs und des Innenrohrs,
- Fig. 4: Seitenansichten der Endseiten einer erfindungsgemäßen Aufbewahrungsvorrichtung,
- Fig. 5 bis 7: Detailansichten einer weiteren Ausgestaltung einer erfindungsgemäßen Aufbewahrungsvorrichtung.

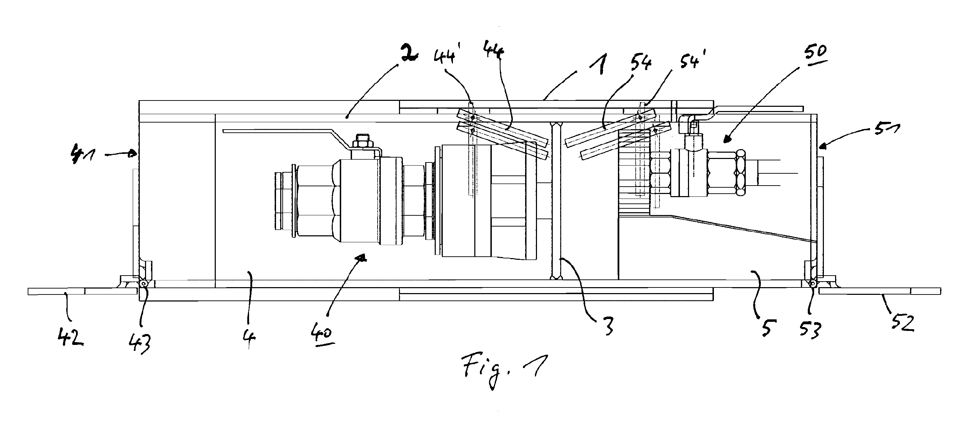

Fig. 1 zeigt eine erfindungsgemäße Aufbewahrungsvorrichtung im Längsschnitt. Diese ist in der gezeigten Ausgestaltung durch ein Doppelrohr gebildet, das ein Außenrohr 1 und ein darin befindliches Innenrohr umfasst, die relativ zueinander um ihre Längsachse verdrehbar sind. In dem Innenrohr 2 sind mittels einer Trennwand 3 zwei voneinander getrennte Aufbewahrungskammern 4 und 5 gebildet zur getrennten Aufbewahrung zweier Gegenstände. In der gezeigten Ausgestaltung ist die Aufbewahrungsvorrichtung ausgestaltet zur Aufbewahrung einer Abwasserkupplung 40 in der Aufbewahrungskammer 4 und einer Trinkwasserkupplung 50 in der Aufbewahrungskammer 5, wobei diese Kupplungen 40, 50 zum Anschluss einer WC-Entsorgungsanlage (über entsprechende Schläuche) an ein geschlossenes Toilettensystem eines Zugs vorgesehen sind. Zum Verschließen bzw. Öffnen einer Entnahmeöffnung 41 bzw. 51 am jeweiligen äußeren Ende der Aufbewahrungskammern 4, 5 ist jeweils ein Verschlussdeckel 42, 52 vorgesehen, der sich über ein Scharnier 43, 53, der an dem Innenrohr 2 angebracht ist, umklappen lässt. Die beiden Verschlussdeckel 42, 52 sind in Fig. 1 jeweils in geöffneter und geschlossener Stellung gezeigt, wobei erfindungsgemäß die Aufbewahrungsvorrichtung so ausgestaltet ist, dass immer nur ein Verschlussdeckel geöffnet sein kann, nicht aber zeitgleich beide Verschlussdeckel 42, 52 (grundsätzlich können aber beide Verschlussdeckel 42, 52 auch zeitgleich geschlossen sein). Es ist eine Ruhestellung zwischen den beiden oben beschriebenen Positionen vorgesehen, mit der die gesamte Box gesichert werden kann, gegen unbefugten Zugriff und als Transportsicherung bei mobilen WC-Entsorgungsanlage.

Innerhalb jeder Aufbewahrungskammer 4, 5 ist ferner jeweils mindestens ein Riegel 44 bzw. 54 (vorliegend drei Riegel) vorgesehen, die an der Innenwand des Innenrohrs 2 umklappbar angebracht sind. Diese werden beispielsweise mittels Federn (nicht gezeigt) so gehalten, dass sie senkrecht zur Längsachse des Innenrohrs liegen, wenn die zugehörige Kupplung 40 bzw. 50 sich nicht in der entsprechenden Aufbewahrungskammer 4, 5 befindet. Dadurch greift das jeweilige obere Ende 44' bzw. 54' des Riegels in eine entsprechende Verriegelungsöffnung (nicht gezeigt) des Außenrohrs 1, wodurch ein relatives Verdrehen des Außenrohrs 1 gegenüber dem Innenrohr 2 verhindert wird. Wenn sich die entsprechende Kupplung 40, 50 jedoch in der zugehörigen Aufbewahrungskammer 4, 5 befindet, wird der entsprechende Riegel 44 bzw. 54 gegen die Federkraft in Richtung auf die Trennwand 3 hin gedrückt. Dadurch greift das obere Ende 44', 54' des Riegels 44, 54 nicht mehr in die Verriegelungsöffnung des Außenrohrs 1, so dass sich nun das Außenrohr 1 gegenüber dem Innenrohr 2 verdrehen lässt.

Die Lage der Riegel kann alternativ auch so gewählt sein, dass sie ohne zusätzliche Mittel, z.B. die oben genannte Feder, nur aufgrund der Schwerkraft mit dem langen Ende nach unten (in die Aufbewahrungskammern) fallen und ihre Funktion erfüllen.

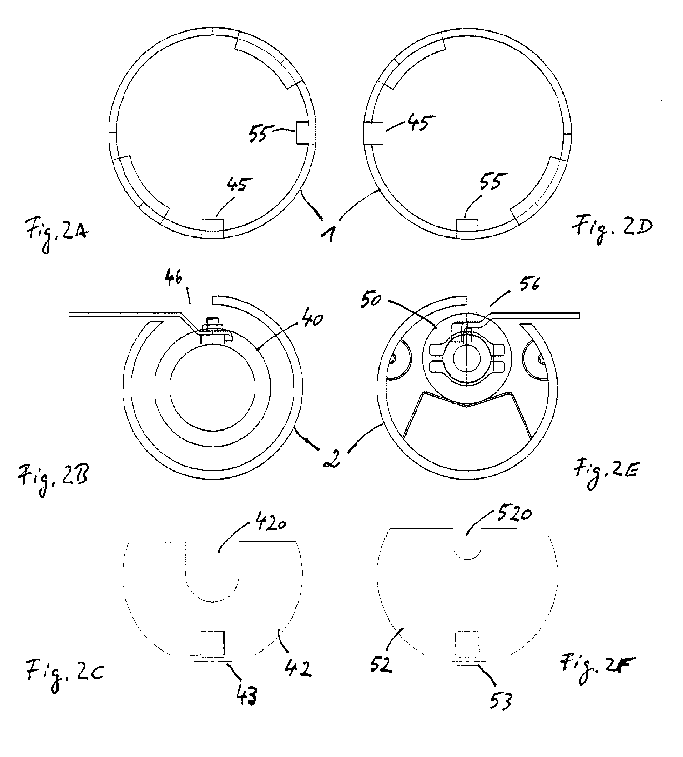

Querschnittsdarstellungen quer durch das Außenrohr, das Innenrohr und die Verschlussdeckel sind in Fig. 2 gezeigt (alle aus Blickrichtung von der Abwasserseite, also von der Seite der Öffnung 41 aus gesehen). Dabei zeigen die Fig. 2A bis 2C einen Querschnitt durch das Außenrohr 1, das Innenrohr 2 und den Verschlussdeckel 42 auf der Abwasserseite, und die Fig. 2D bis 2F zeigen einen Querschnitt durch das Außenrohr 1, das Innenrohr 2 und den Verschlussdeckel 52 auf der Trinkwasserseite. Fig. 2A zeigt dabei die Stellung des Außenrohrs 1, wenn sich die Aufbewahrungskammer 4 auf der Abwasserseite in Entnahmeposition befindet, wenn also der Verschlussdeckel 42 geöffnet werden kann bzw. geöffnet ist, und sich die Aufbewahrungskammer 5 auf der Trinkwasserseite in Verschlussposition befindet, also der Verschlussdeckel 52 geschlossen ist. Ein Öffnen des Verschlussdeckels 42 in dieser Stellung des Außenrohrs 1 wird dadurch erreicht, dass eine am Rand des Außenrohrs am abwasserseitigen Ende 41 vorgesehene Aussparung 45 sich in einer solchen Stellung befindet (hier in der untersten Position), dass sie direkt neben dem Scharnier 43 des Verschlussdeckels 42 liegt, so dass sich das Scharnier 43 bewegen und der Verschlussdeckel 42 damit öffnen lässt. Die um 90° dazu am trinkwasserseitigen Ende 51 des Außenrohrs 1 angebrachte Aussparung 55 liegt dabei in dieser Stellung des Außenrohrs nicht dem Scharnier 53 des Verschlussdeckels 52 gegenüber, so dass sich der Verschlussdeckel 52 nicht öffnen lässt.

In Fig. 2D ist dagegen die Position des Außenrohrs 1 so, dass sich nun die Aussparung 55 in der untersten Position gegenüber dem Scharnier 53 befindet, so dass sich das Scharnier 53 bewegen und damit der Verschlussdeckel 52 öffnen lässt, während nun der Verschlussdeckel 42 nicht mehr geöffnet werden kann, da sich die Aussparung 45 nicht mehr in der in Fig. 2A gezeigten Position befindet. Die beiden gebogenen längeren Aussparungen werden je eine an jedem Ende außen an dem Außenrohr befestigt. Sie verhindern zusätzlich, dass die Verschlussdeckel 42, 52 geöffnet werden können (2. Sicherung), wenn sich Innen- und Außenrohr nicht in den entsprechenden korrekten Positionen befinden.

In Fig. 2B und 2E sind seitliche Querschnitte durch das Innenrohr 2 sowie die beiden Kupplungen 40, 50 gezeigt, die jeweils über Eingrifföffnungen 46 bzw. 56 verfügen, durch die ein Benutzer hineingreifen und die Kupplungseinheit (Kupplung und Kugelhahn) fassen kann, um sie durch die jeweilige Entnahmeöffnung 41 bzw. 51 am jeweiligen Ende des Innenrohrs 2 herauszunehmen.

In den Fig. 2C und 2F sind die beiden Verschlussdeckel 42, 52 gezeigt. Diese verfügen jeweils über eine Aussparung 420, 520, durch die ein Abwasserschlauch bzw. Trinkwasserschlauch geführt werden kann, der somit an der zugehörigen Kupplung 40, 50 angeschlossen bleiben kann, auch wenn die Kupplung sich innerhalb der zugehörigen Aufbewahrungskammer befindet.

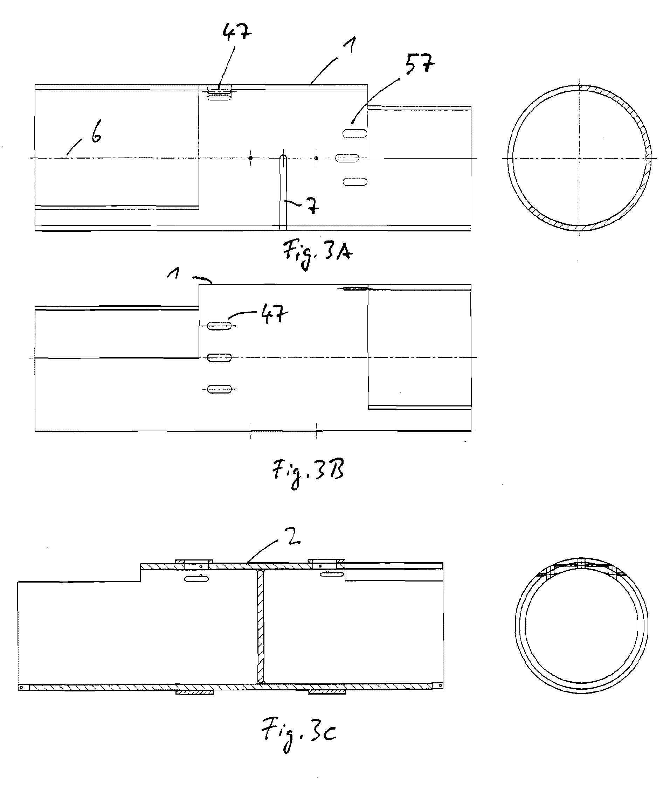

In den Fig. 3A und 3B ist nochmals das Außenrohr in Längsansicht von außen gezeigt, einmal in der Entnahmeposition für die Abwasserkupplung 40 (Fig. 3A) und einmal in der Entnahmeposition für die Trinkwasserkupplung (Fig. 3B). Erkennbar sind dort jeweils drei Langlöcher 47 auf der Abwasserseite bzw. 57 auf der Trinkwasserseite, die die Verriegelungsöffnungen für drei korrespondierende Riegel 44 bzw. 54 darstellen. Das mittlere Langloch 57 auf der Trinkwasserseite ist aus fertigungstechnischen Gründen etwas versetzt zu den beiden außen liegenden Langlöchern, da die Trinkwasserkupplung einen kleineren Durchmesser hat als die Abwasserkupplung. Sie wird deshalb mit drei eingeschweißten Elementen so geführt, dass sie sich möglichst dicht oben am Innenrohr befindet. Um sicher zu stellen, dass jeder Riegel von der Kupplung erfasst wird, müssen diese dichter beieinander liegen. Die Achsen für die Riegel können einfacher gefertigt und preisgünstiger werden, wenn die Löcher versetzt sind.

Ferner ist in Fig. 3A ein senkrecht zur Längsachse etwa in einem Winkelbereich von 90° liegender Schlitz 7 erkennbar, durch den das Innenrohr mittels einer (nicht gezeigten) Halterung festgehalten wird, während das Außenrohr 1 um das Innenrohr 2 herum etwa um 90° verdrehbar ist. Dazu kann am Außenrohr 1 ein manuell betätigbarer Griff (nicht gezeigt) vorgesehen sein.

In Fig. 3C ist ein Längsschnitt des Innenrohrs 2 nochmals gezeigt.

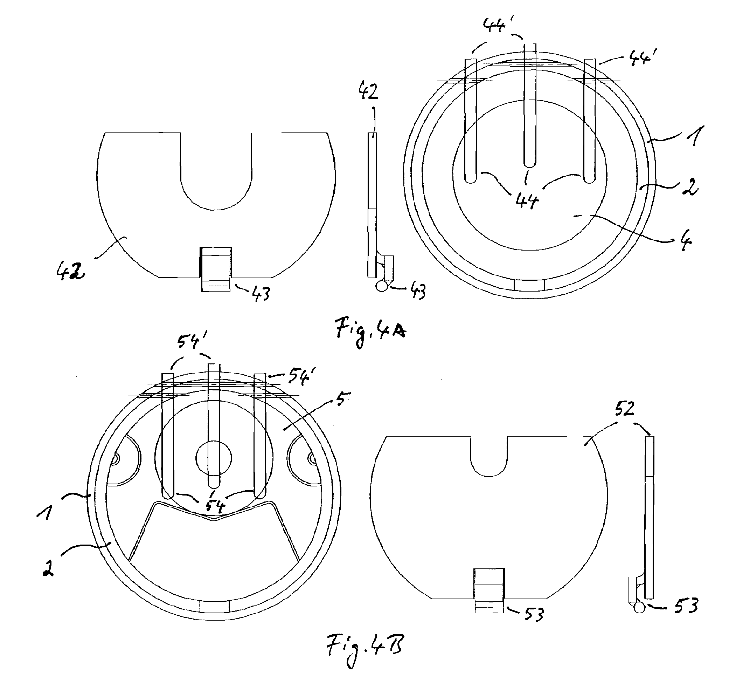

Fig. 4A zeigt nochmals den abwasserseitigen Verschlussdeckel 42 mit dem Scharnier 43 in Vorder- und Seitenansicht sowie einen Querschnitt durch die abwasserseitige Aufbewahrungskammer 4. Dort sind nochmals die Riegel 44 in senkrecht zur Längsachse der Aufbewahrungsvorrichtung liegender Stellung gezeigt, in der die oberen Enden 44' in entsprechende Ausnehmungen (47) in dem Außenrohr 1 eingreifen und somit ein Verdrehen des Außenrohrs 1 gegenüber dem Innenrohr 2 verhindern.

In Fig. 4B zeigt nochmals den trinkwasserseitigen Verschlussdeckel 42 mit dem Scharnier 53 in Vorder- und Seitenansicht sowie einen Querschnitt durch die trinkwasserseitige Aufbewahrungskammer 5. Auch dort sind die Riegel 54 in senkrechter Lage erkennbar, deren obere Enden 54' wiederum in entsprechende Ausnehmungen (57) in dem Außenrohr 1 eingreifen, um ein Verdrehen gegenüber dem Innenrohr 2 zu verhindern.

Die erfindungsgemäße Aufbewahrungsvorrichtung unterbindet somit wirksam ein Berühren beider Schläuche bzw. Kupplungen, so dass beispielsweise die Trinkwasserkupplung 50 nur dann aus der Aufbewahrungskammer 5 entnommen werden kann, wenn die Abwasserkupplung 40 in der Aufbewahrungskammer 4 steckt (entsprechendes gilt für die Entnahme der Abwasserkupplung 40). Zur Entnahme der Trinkwasserkupplung 50 sind somit die folgenden Schritte notwendig:
a) Die Abwasserkupplung 40 ist auf der vorgesehenen Seite in die Aufbewahrungskammer 4 zu stecken. Dadurch werden die unteren Enden der, in der gezeigten Ausgestaltung, drei hängenden Riegel 44 nach hinten gedrückt, so dass die oberen Enden 44' dieser Riegel 44 das Außenrohr 1 freigeben.
b) Der abwasserseitige Verschlussdeckel 42 wird geschlossen. Nur wenn die beiden Schritte a) und b) erfüllt sind, also die Riegel 44 zur Trennwand 3 hin umgeklappt sind und der Verschlussdeckel 42 geschlossen ist, kann das Außenrohr 1 gegenüber dem Innenrohr 2 verdreht werden.
c) Das Außenrohr 1 wird um ca. 45° gegenüber dem Innenrohr 2 verdreht.
d) Der trinkwasserseitige Verschlussdeckel 52 wird geöffnet. Dadurch wird gleichzeitig verhindert, dass das Außenrohr 1 wieder zurückgedreht werden kann.
e) Die Trinkwasserkupplung 50 kann nun aus der Aufbewahrungskammer 5 entnommen werden. Dadurch pendeln die Riegel 54 nach unten, so dass die oberen Enden 54' in die vorgesehenen Verriegelungsöffnungen 57 im Außenrohr 1 eingreifen. Auch falls jetzt der trinkwasserseitige Verschlussdeckel 52 geschlossen wird, ist es somit nicht möglich, das Außenrohr 1 zu verdrehen.

Um die Abwasserkupplung 40 aus der Aufbewahrungskammer 4 zu entnehmen, muss entsprechend den genannten Schritten a) bis e) auf der Trinkwasserseite verfahren werden.

Die Bauteile der Aufbewahrungsvorrichtung sind bevorzugt so zusammenmontiert, dass sie nur von einem Fachmann und nicht ohne Einsatz von Werkzeug auseinandergebaut werden können. Danach kann sie auch nur wieder unter großem Aufwand zusammengebaut werden.

Die Oberflächen der einzelnen Bauteile sind bevorzugt in einem dreifachen QPQ-Verfahren gehärtet und korrosionsgeschützt. Die Aufbewahrungskammern 4 und 5 können nur mit Vorsatz und Gewalt aufgebrochen werden.

Unten an der Seite der Aufbewahrungsvorrichtung kann sich ein offener Auslauf befinden, insbesondere an beiden Aufbewahrungskammern, so dass die Aufbewahrungskammern leicht mit Wasser ausgespült werden können. Die Aufbewahrungskammer wird dazu beispielsweise um 5°-15° gedreht, so dass das Wasser ablaufen kann.

Bevorzugt werden die Kupplungen in geschlossenem Zustand in die entsprechenden Aufbewahrungskammern eingebracht, insbesondere wenn an die Kupplungen die entsprechenden Schläuche angeschlossen bleiben, damit kein in den Schläuchen befindliches Wasser (insbesondere auf der Abwasserseite) in die entsprechende Aufbewahrungskammer gelangen kann.

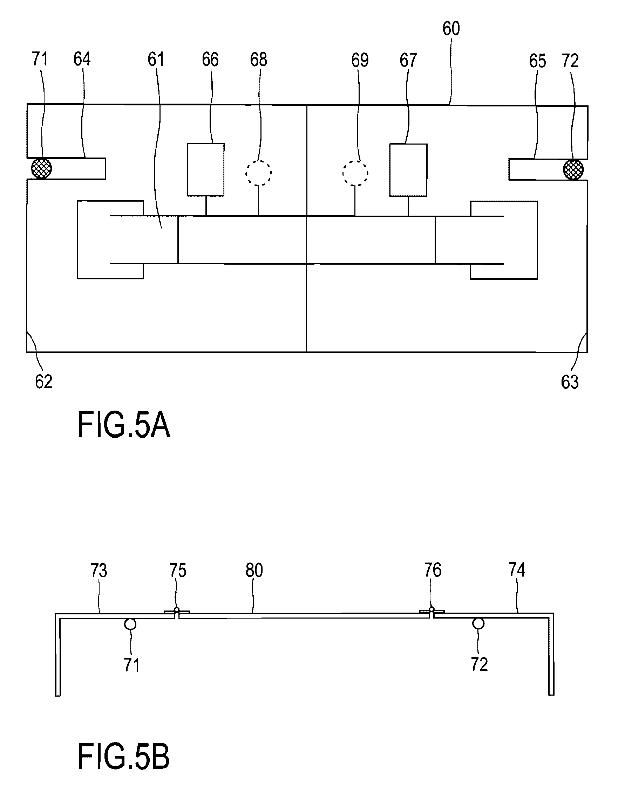

In den Figuren 5 bis 7 sind Details einer weiteren Ausgestaltung der erfindungsgemäßen Aufbewahrungsvorrichtung gezeigt. Diese Ausgestaltung besteht aus einer in zwei Aufbewahrungskammern unterteilten einwandigen Aufbewahrungsbox, die also nicht, wie die oben beschriebene Ausgestaltung, ein Außenrohr und ein Innenrohr umfasst und somit auch einen rechteckförmigen Querschnitt aufweisen kann. Die gegenseitige Verriegelung der Aufbewahrungskammern wird bei dieser Ausgestaltung durch eine Verschiebevorrichtung 60 gewährleistet, wie sie in Draufsicht in Fig. 5A gezeigt ist.

Diese Verschiebevorrichtung 60 ist beispielsweise an einer Längsseite der Aufbewahrungsvorrichtung in Längsrichtung verschiebbar angebracht und wird beispielsweise oben und unten in entsprechenden Nuten der Aufbewahrungsbox geführt. Zum manuellen Hin- und Herschieben ist an der Verschiebevorrichtung 60 ein Griff 61 angebracht. An beiden Enden 62, 63, die in etwa den Enden 41, 51 der Aufbewahrungsvorrichtung gegenüberliegen, sind Führungsnuten 64, 65 vorgesehen, in denen an den Verschlussdeckeln der beiden Aufbewahrungskammern angebrachte Stifte 71, 72 geführt werden. Diese Verschlussdeckel 73, 74 mit den zugehörigen Führungsstiften 71, 72 sind in Fig. 5B gezeigt.

Die Verschlussdeckel 73, 74 sind dabei über Scharniere 75, 76 mit dem Gehäuse 80 der Aufbewahrungsbox verbunden und so ausgestaltet, dass sie nach oben aufklappen können, so dass ein Gegenstand in die entsprechende Aufbewahrungskammer eingebracht oder daraus entnommen werden kann. Dabei sind die Verschiebevorrichtung 60 und die Verschlussdeckel 73, 74 so ausgestaltet, dass nur dann, wenn sich der entsprechende Führungsstift 71 bzw. 72 nicht mehr in der zugehörigen Führungsnut 64 bzw. 65 befindet, geöffnet werden kann. Ferner ist die Verschiebevorrichtung 60, insbesondere die Länge der Führungsnuten 64, 65 so ausgestaltet, dass sich maximal immer nur ein Führungsstift 71 bzw. 72 außerhalb der zugehörigen Führungsnut 64, 65 befinden kann, dass sich aber auch beide Führungsstifte 71, 72 gleichzeitig in ihren Führungsnuten 64, 65 befinden können. Somit ist sichergestellt, dass immer nur ein Verschlussdeckel 73 bzw. 74 geöffnet werden kann, dass aber beide Verschlussdeckel gleichzeitig geschlossen sein können.

In Fig. 5A sind ferner zwei Abdeckplatten 66, 67 gezeigt. Diese dienen dazu, entsprechende Verriegelungsöffnungen 68, 69 in der Gehäusewand der Aufbewahrungsbox abzudecken. Genauer gesagt wird die Verriegelungsöffnung 68 von der Abdeckplatte 66 dann abgedeckt, wenn sich der Führungsstift 71 nicht in der Führungsnut 64 befindet, so dass der Verschlussdeckel 72 geöffnet werden kann. Entsprechend wird durch die Abdeckplatte 67 die Verriegelungsöffnung 69 abgedeckt, wenn sich der Führungsstift 71 nicht in der Führungsnut 65 befindet und somit der Verschlussdeckel 74 geöffnet werden kann.

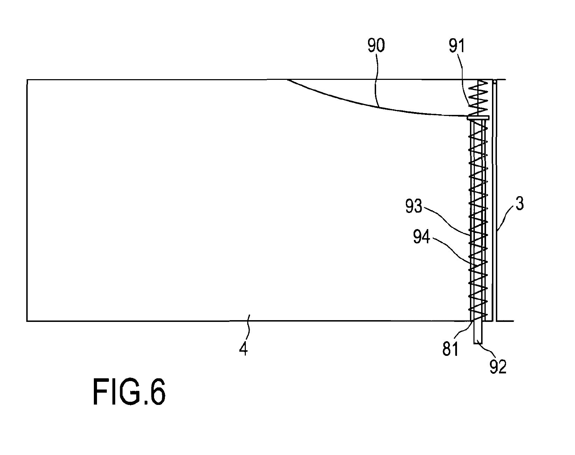

Die Funktion der Verriegelungsöffnungen 68, 69 soll anhand der Fig. 6 erläutert werden. Dort ist ein Längsschnitt durch die Aufbewahrungskammer 4 gezeigt, in der sich gerade kein aufzubewahrender Gegenstand befindet. Dort ist ein Federblech 90 an der Innenwand der Aufbewahrungskammer 4 im Bereich der Trennwand 3 angebracht, das mittels einer Druckfeder 91 etwas in den Innenraum gedrückt wird. Dadurch wird ein im Bereich der Trennwand an dem Federblech 90 angebrachter Verriegelungsstift 92 nach unten gedrückt, so dass das untere Ende des Führungsstiftes 92 durch eine Öffnung 81 der Aufbewahrungsbox in die Verriegelungsöffnung 68 in der Verschiebevorrichtung 60 ragt. Dadurch wird in diesem Zustand ein Verschieben der Verschiebevorrichtung 60 verhindert, so dass selbst bei Verschließen des zugehörigen Verschlussdeckels 73 (bei nicht in der Aufbewahrungskammer 4 befindlichem Gegenstand) die Verschiebevorrichtung 60 in eine Position gebracht werden kann, in der dann der Gegenstand aus der anderen Aufbewahrungskammer 5 entnommen werden könnte.

Es kann vorgesehen sein, dass der Verriegelungsstift 92 in einem Führungsrohr 93 geführt wird und dass zusätzlich oder statt der Druckfeder 91 eine Zugfeder 94 zwischen dem Federblech 90 und der Öffnung 81 vorgesehen ist.

Wenn nun ein Gegenstand in die Aufbewahrungskammer 4 bestimmungsgemäß eingebracht wird, drückt er gegen das Federblech 90, so dass dieses zur Innenwand hin (in Fig. 6 nach oben) gedrückt wird, so dass sich der Verriegelungsstift 92 ebenfalls nach oben bewegt und nicht mehr durch die Öffnung 81 nach außen in die Verriegelungsöffnung 68 ragt. Dadurch wird die Verschiebevorrichtung 60 freigegeben und kann wieder in Längsrichtung bewegt werden.

Die Abdeckplatten 66, 67 erfüllen den Zweck, einen durch die entsprechende Verriegelungsöffnung 68, 69 herausragenden Verriegelungsstift abzudecken und damit vor Manipulationen durch einen Benutzer zu schützen, so dass also ein Benutzer nicht unsachgemäß den Verriegelungsstift hineindrückt, um ein Verschieben der Verschiebevorrichtung 60 freizugeben und damit trotz leerer Aufbewahrungskammer 4 den Gegenstand aus der anderen Aufbewahrungskammer 5 herauszunehmen, was ja gerade vermieden werden soll.

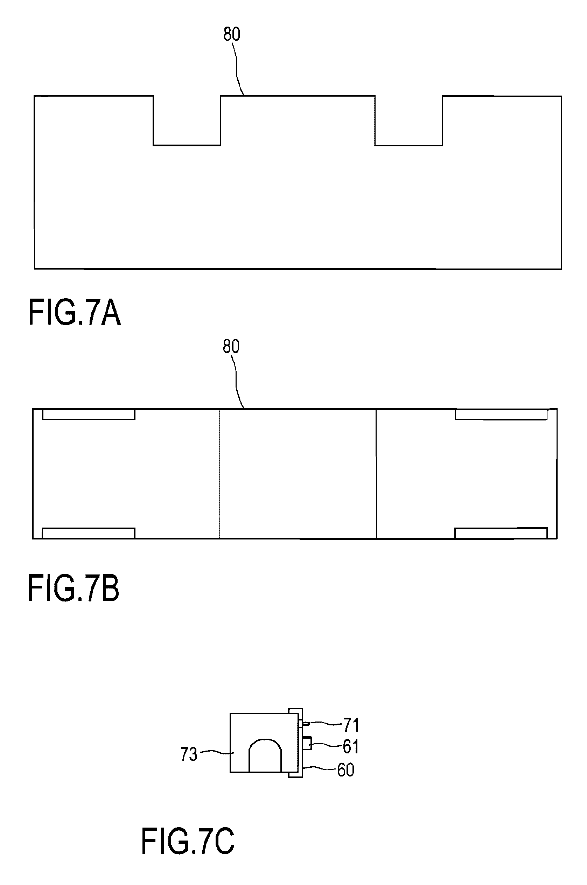

Fig. 7A zeigt die Rückseite des Gehäuses 80 der Aufbewahrungsbox mit Ausnehmung für die Griffe der Verschlussklappen. Fig. 7B zeigt eine Draufsicht auf das Gehäuse 80 der Aufbewahrungsbox, in der das Profil innen für die Halterung der Verschlussdeckel an dem Gehäuse 80 der Aufbewahrungsbox zu erkennen ist.

Fig. 7C zeigt nochmals einen Verschlussdeckel 73 in Vorderansicht. Erkennbar ist der an dem Verschlussdeckel 73 angebrachte Führungsstift 71, der in der zugehörigen Führungsnut 64 der Verschiebevorrichtung 60 geführt wird. Erkennbar ist ferner der an der Verschiebevorrichtung 60 angebrachte Griff 61.

## Patentansprüche

1. Vorrichtung zur getrennten Aufbewahrung zweier Gegenstände und zur Verhinderung der gleichzeitigen Entnahme beider Gegenstände, mit zwei voneinander getrennten Aufbewahrungskammern zur Aufbewahrung jeweils eines der Gegenstände und mit einem Bewegungsmittel zum Verbringen der Aufbewahrungskammern in eine Entnahmeposition oder eine Verschlussposition, wobei jede Aufbewahrungskammer
- die Entnahmeposition oder die Verschlussposition einnehmen kann, wobei die Aufbewahrungskammern so ausgestaltet sind, dass nur jeweils eine Aufbewahrungskammer die Entnahmeposition einnehmen kann,
- einen Verschlussdeckel aufweist zum Verschließen einer Entnahmeöffnung der zugehörigen Aufbewahrungskammer zum Entnehmen und Einbringen des darin aufzubewahrenden Gegenstandes, wobei die Verschlussdeckel so ausgestaltet sind, dass sie nur geöffnet und geschlossen werden können, wenn sich die zugehörige Aufbewahrungskammer in der Entnahmeposition befindet, und
- eine Verriegelung aufweist zur Blockierung einer Veränderung der Position der zugehörigen Aufbewahrungskammer, wenn sich der Gegenstand nicht in der zugehörigen Aufbewahrungskammer befindet, und zur Freigabe einer Veränderung der Position der zugehörigen Aufbewahrungskammer, wenn sich der Gegenstand in der zugehörigen Aufbewahrungskammer befindet.

2. Vorrichtung nach Anspruch 1,
**dadurch gekennzeichnet, dass** die Vorrichtung ein mittels einer Trennwand in die Aufbewahrungskammern unterteiltes Innenrohr und ein um das Innenrohr herum angeordnetes, relativ zu dem Innenrohr verdrehbares Außenrohr aufweist.

3. Vorrichtung nach Anspruch 2,
**dadurch gekennzeichnet, dass** das Außenrohr an den beiden Enden jeweils eine Aussparung aufweist zur Aufnahme eines korrespondierenden Eingriffs, insbesondere eines Scharniers, des zugehörigen Verschlussdeckels in der Entnahmeposition der zugehörigen Aufbewahrungskammer, so dass sich der Verschlussdeckel öffnen und schließen lässt.

4. Vorrichtung nach Anspruch 3,
**dadurch gekennzeichnet, dass** die Aussparungen an den beiden Enden des Außenrohrs an unterschiedlichen Winkelpositionen entlang des Umfangs angebracht sind.

5. Vorrichtung nach einem der Ansprüche 2 bis 4,
**dadurch gekennzeichnet, dass** die Verriegelung jeweils mindestens einen Riegel aufweist, der bei aus der Aufbewahrungskammer entnommenem Gegenstand in eine zugehörige Verriegelungsöffnung in dem Außenrohr eingreift und dadurch ein Verdrehen des Außenrohrs gegenüber dem Innenrohr verhindert, und der bei in der Aufbewahrungskammer befindlichem Gegenstand nicht in die Verriegelungsöffnung in dem Außenrohr eingreift und dadurch ein Verdrehen des Außenrohrs gegenüber dem Innenrohr erlaubt.

6. Vorrichtung nach einem der Ansprüche 1 bis 4,
**dadurch gekennzeichnet, dass** die Verriegelung jeweils ein an der Innenwand der Aufbewahrungskammer angebrachtes Federblech aufweist, das bei nicht in der Aufbewahrungskammer befindlichem Gegenstand in den Innenraum der Aufbewahrungskammer ragt und an dem ein Stift angebracht ist, der in eine zugehörige Verriegelungsöffnung eingreift.

7. Vorrichtung nach einem der vorstehenden Ansprüche,
**dadurch gekennzeichnet, dass** das Bewegungsmittel ein mechanisch zu betätigender Griff oder ein Antriebsmittel ist.

8. Vorrichtung nach einem der vorstehenden Ansprüche,
**dadurch gekennzeichnet, dass** die Oberflächen der Vorrichtung mittels eines QPQ-Verfahrens behandelt sind.

9. Vorrichtung nach einem der vorstehenden Ansprüche,
**dadurch gekennzeichnet, dass** die Aufbewahrungskammern ausgestaltet sind zur Aufnahme von Schlauchkupplungen, insbesondere einer Abwasserkupplung und einer Trinkwasserkupplung zum getrennten Anschluss einer WC-Entsorgungs-anlage an eine mobile Toilette, insbesondere an ein geschlossenes Toilettensystem eines Zugs.

10. Vorrichtung nach Anspruch 9,
**dadurch gekennzeichnet, dass** die Verschlussdeckel jeweils eine Aussparung aufweisen zur Durchführung eines an der jeweiligen Schlauchkupplung angeschlossenen Schlauchs.

11. Vorrichtung nach Anspruch 1,
**dadurch gekennzeichnet, dass** die Vorrichtung eine mittels einer Trennwand in die Aufbewahrungskammern unterteilte Aufbewahrungsbox aufweist, an der außen eine in Längsrichtung der Aufbewahrungsbox verschiebbare Verschiebevorrichtung angebracht ist mit Führungsnuten, in denen an den Verschlussdeckeln angebrachte Führungsstifte laufen, wobei die Führungsnuten und Führungsstifte so angeordnet und ausgestaltet sind, dass jeweils nur ein Führungsstift freigegeben ist zum Öffnen des zugehörigen Verschlussdeckels.

12. Vorrichtung nach einem der vorstehenden Ansprüche,
**dadurch gekennzeichnet, dass** die Aufbewahrungskammern derart ausgestaltet sind, dass alle Aufbewahrungskammern zeitgleich zur Transportsicherung und zum Schutz gegen unbefugte Zugriffe in eine Ruheposition gebracht werden können.

13. Vorrichtung mit einer Abwasserkupplung und einer Trinkwasserkupplung zum getrennten Anschluss einer WC-Entsorgungsanlage an eine mobile Toilette, insbesondere an ein geschlossenes Toilettensystem eines Zugs, die in jeweils einer von zwei voneinander getrennten Aufbewahrungskammern aufbewahrt sind, und mit einem Bewegungsmittel zum Verbringen der Aufbewahrungskammern in eine Entnahmeposition oder eine Verschlussposition, wobei jede Aufbewahrungskammer
- die Entnahmeposition oder die Verschlussposition einnehmen kann, wobei die Aufbewahrungskammern so ausgestaltet sind, dass nur jeweils eine Aufbewahrungskammer die Entnahmeposition einnehmen kann,
- einen Verschlussdeckel aufweist zum Verschließen einer Entnahmeöffnung der zugehörigen Aufbewahrungskammer zum Entnehmen und Einbringen der darin aufzubewahrenden Kupplung, wobei die Verschlussdeckel so ausgestaltet sind, dass sie nur geöffnet und geschlossen werden können, wenn sich die zugehörige Aufbewahrungskammer in der Entnahmeposition befindet, und
- eine Verriegelung aufweist zur Blockierung einer Veränderung der Position der zugehörigen Aufbewahrungskammer, wenn sich keine Kupplung in der zugehörigen Aufbewahrungskammer befindet, und zur Freigabe einer Veränderung der Position der zugehörigen Aufbewahrungskammer, wenn sich eine in der zugehörigen Aufbewahrungskammer befindet.
